# EUROPÄISCHE PATENTSCHRIFT

(11) **EP 0 342 472 B1**
(45) Veröffentlichungstag und Bekanntmachung des Hinweises auf die Patenterteilung: **07.01.1993**
(21) Anmeldenummer: 89108273.7
(22) Anmeldetag: 09.05.1989
(51) Int. Cl.: C01B 33/18

(54) **Kugelförmige, hydrophile Kieselsäure, Verfahren zu seiner Herstellung und Verwendung**
Spherical hydrophilous silica, process for its preparation and use
Silice hydrophile sphérique, son procédé de fabrication et son utilisation

(30) Priorität: 19.05.1988 DE 3817045; 22.04.1989 DE 3913260
(43) Veröffentlichungstag der Anmeldung: 23.11.1989
(73) Patentinhaber: Degussa Aktiengesellschaft, 60311 Frankfurt (DE)
(72) Erfinder: Pauli, Ingo, Dr., D-8755 Alzenau (DE); Kleinschmit, Peter, Dr., D-6450 Hanau 9 (DE); Schwarz, Rudolf, Dr., D-8755 Alzenau - Wasserlos (DE)

(56) Entgegenhaltungen:
- CH-A- 378 297
- FR-A- 1 427 644
- US-A- 4 772 644

## Beschreibung

Die Erfindung betrifft eine kugelförmige, hydrophile Kieselsäure, das Verfahren zu seiner Herstellung sowie seine Verwendung.

Es ist bekannt, Siliciumtetrachlorid und Wasser getrennt auf 600 °C vorzuerhitzen und bei dieser Temperatur miteinander über einen Zeitraum von 12 Stunden umzusetzen. Man erhält dabei ein benetzbares Kieselsäurepulver mit einer durchschnittlichen Teilchengröße von 0,3 µ. Aus derselben Druckschrift ist es weiterhin bekannt, Wasserdampf und Siliciumtetrachlorid während 5 Stunden bei einer Temperatur von 300 °C miteinander umzusetzen.

Dabei erhält man ein Kieselsäurepulver mit einer durchschnittlichen Teilchengröße von 0,2 µm (DE-A D 13 400 IVa/12 vom 29.12.1955).

Das Kieselsäurepulver, das gemäß dem Stand der Technik hergestellt wird, hat den Nachteil, daß es für den beabsichtigten Verwendungszweck zu feinteilig ist.

Gegenstand der Erfindung ist eine kugelförmige, hydrophile Kieselsäure, bestehend aus kompakten, massiven, nicht kristallinen Teilchen ohne innere Poren mit einer Teilchengröße von 0,5 bis 10 µm, vorzugsweise 0,5 bis 4 µm, insbesondere 1 bis 3 µm, mit einer BET-Oberfläche von < 50 m²/g, vorzugsweise von 1 bis 10 m²/g.

Die erfindungsgemäße kugelförmige, hydrophile Kieselsäure kann mit Vorteil als Füllstoff in electronic packages oder als Antiblockingmittel in Kunststoff-Folien eingesetzt werden.

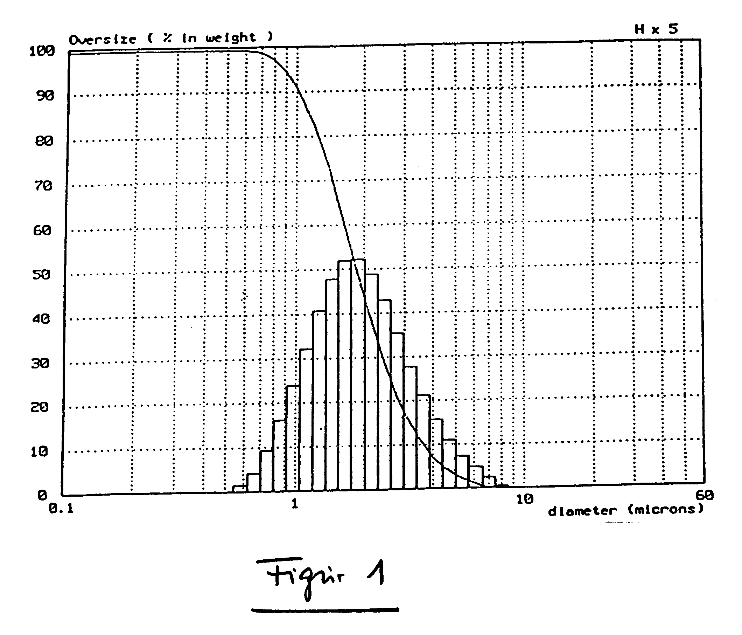

Vorzugsweise weist die erfindungsgemäße Kieselsäure die Teilchengrößenverteilung gemäß Figur 1 auf.

Ein weiterer Gegenstand der Erfindung ist ein Verfahren zur Herstellung der kugelförmigen, hydrophilen Kieselsäure, bestehend aus kompakten, massiven, nicht kristallinen Teilchen ohne innere Poren mit einer Teilchengröße von 0,5 bis 10 µm, vorzugsweise 0,5 bis 4 µm, insbesondere 1 bis 3 µm, mit einer BET-Oberfläche von < 50 m²/g, vorzugsweise von 1 bis 10 m²/g, welches dadurch gekennzeichnet ist, daß man Wasserdampf und gasförmiges Siliciumtetrachlorid getrennt auf eine Temperatur von 300 bis 400 °C erhitzt, die beiden Komponenten bei einer Temperatur von 300 bis 400 °C in einem Molverhältnis von 2 : 1 bis 8 : 1, vorzugsweise 6,9 : 1, insbesondere 6,7 : 1 = H₂O : SiCl₄ miteinander vermischt, die gasförmige Mischung durch ein auf eine Temperatur von 600 bis 1200 °C erhitztes enges Vorreaktionsrohr, anschließend durch ein auf 600 bis 1000 °C, vorzugsweise 700 bis 800 °C erhitztes weiteres Reaktionsrohr mit einer Verweilzeit von > 5 sec, vorzugsweise > 9 sec und mit einem Unterdruck von mindestens 100 mm H₂O-Säule (981 Pa) leitet und das Reaktionsprodukt von den Reaktionsgasen abtrennt.

Die erfindungsgemäße Kieselsäure kann mit einem hohen Füllungsgrad von 60 % in Harzen eingesetzt werden, die zu Herstellung von electronic packages verwendet werden. Eine derartige Kapsel für integrierte Schaltungen kann aus einer Epoxid-Niederdruck-Preßmasse bestehen.

Die erfindungsgemäße Kieselsäure weist dabei den Vorteil auf, daß ein Entgasen der Preßmasse ohne Schäumen durchgeführt werden kann.

### Beispiel 1

Siliciumtetrachlorid und Wasser werden verdampft. Beide Gase werden über getrennte Leitungen im Molverhältnis H₂O : SiCl₄ = 3 : 1 gleichzeitig und kontinuierlich in einen Röhrenreaktor eingeleitet. Der Röhrenreaktor wird durch eine externe Heizung auf eine Temperatur von 730 °C aufgeheizt

Die Verweilzeit der beiden Gase in dem Reaktor beträgt 9,53 sec. In dem Reaktor wird ein Unterdruck von 100 mm H₂O-Säule eingehalten.

Das erhaltene Siliciumdioxid weist eine Teilchengrößenverteilung von 0,5 bis 4 µ nach REM und TEM auf. Die spezifische Oberfläche beträgt 2,3 m²/g.

### Beispiel 2

Gasförmiges Siliciumtetrachlorid und Wasser werden im Molverhältnis 1 : 6,81 bei 100 - 400 °C vermischt. Das Gemisch wird durch ein auf 800 °C erhitztes Vorreaktionsrohr geleitet und anschließend und bei 700 ± 20 °C miteinander umgesetzt.

Das erhaltene Siliciumdioxid weist eine Teilchengrößenverteilung gemäß Figur 1 auf, ermittelt mit dem Cilas-Alcatel Granulometer HR 850 163.

Die mittlere Teilchengröße beträgt 1,86 µm.

Die BET-Oberfläche beträgt 3,1 m²/g (DIN 66 131).

## Patentansprüche

1. Kugelförmige, hydrophile Kieselsäure, bestehend aus kompakten, massiven, nicht kristallinen Teilchen ohne innere Poren mit einer Teilchengröße von 0,5 bis 10 µm, vorzugsweise 0,5 bis 4 µm, insbesondere 1 bis 3 µm,
mit einer BET-Oberfläche von < 50 m²/g, vorzugsweise von 1 bis 10 m²/g.

2. Verfahren zur Herstellung einer kugelförmigen hydrophilen Kieselsäure, bestehend aus kompakten, massiven, nicht kristallinen Teilchen ohne innere Poren mit einer Teilchengröße von 0,5 bis 10 µm, vorzugsweise 0,5 bis 4 µm, insbesondere 1 bis 3 µm,
mit einer BET-Oberfläche von < 50 m²/g, vorzugsweise von 1 bis 10 m²/g, dadurch gekennzeichnet, daß man Wasserdampf und gasförmiges Siliciumtetrachlorid getrennt auf eine Temperatur von 300 bis 400 °C erhitzt, die beiden Komponenten bei einer Temperatur von 300 bis 400 °C miteinander in einem Molverhältnis von 2 : 1 bis 8 : 1 = H₂O : SiCl₄ vermischt, die gasförmige Mischung durch ein auf eine Temperatur von 600 bis 1200 °C erhitztes enges Vorreaktionsrohr, anschließend durch ein auf 600 bis 1000 °C, vorzugsweise 700 bis 800 °C erhitztes, weiteres Reaktionsrohr mit einer Verweilzeit von > 5 sec, vorzugsweise > 9 sec und mit einem Unterdruck von mindestens 100 mm H₂O-Säule (981 Pa) leitet und das Reaktionsprodukt von den Reaktionsabgasen abtrennt.

3. Verwendung der kugelförmigen, hydrophilen Kieselsäure nach Anspruch 1 als Füllstoff in Harzen für electronic packages.

4. Verwendung der kugelförmigen, hydrophilen Kieselsäure nach Anspruch 1 als Antiblocking-Mittel in Kunststoff-Folien.

## Claims

1. Spherical hydrophilic silica consisting of compact, solid, non-crystalline particles free from internal pores and having a particle size of from 0.5 to 10 µm, preferably from 0.5 to 4 µm, in particular from 1 to 3 µm, with a BET surface area of < 50 m²/g, preferably from 1 to 10 m²/g.

2. A process for the preparation of a spherical hydrophilic silica consisting of compact, solid, non-crystalline particles free from internal pores and having a particle size of from 0.5 to 10 µm, preferably from 0.5 to 4 µm, in particular from 1 to 3 µm, with a BET surface area of < 50 m²/g, preferably from 1 to 10 m²/g, characterised in that water vapour and gaseous silicon tetrachloride are heated separately to a temperature of from 300 to 400°C, the two components are mixed together in a molar ratio of 2 : 1 to 8 : 1 = H₂O : SiCl₄ at a temperature from 300 to 400°C, the gaseous mixture is passed through a narrow prereaction tube heated to a temperature of from 1600 to 1200°C and thereafter through a further reaction tube heated to 600 to 1000°C, preferably from 700 to 800°C, with a residence time of > 5 sec, preferably > 9 sec, and with a vacuum of at least 100 mm water column 981 Pa, and the reaction product is separated from the exhaust gases of the reaction.

3. Use of the spherical, hydrophilic silica according to Claim 1 as filler in resins for electronic packages.

4. Use of the spherical, hydrophilic silica according to Claim 1 as antiblocking agent in plastics films.

## Revendications

1. Silice hydrophile sphérique, constituée de particules compactes, massives, non cristallines sans pores internes avec une taille de particules de 0,5 à 10 x 10⁻⁶ m, de préférence 0,5 à 4 x 10⁻⁶ m, notamment 1 à 3 x 10⁻⁶ m, avec une surface BET < 50 m²/g, de préférence comprise entre 1 et 10 m²/g.

2. Procédé de préparation de silice hydrophile sphérique, constituée de particules compactes, massives, non cristallines sans pores internes avec une taille de particules de 0,5 à 10 x 10⁻⁶ m, de préférence 0,5 à 4 x 10⁻⁶ m, notamment 1 à 3 x 10⁻⁶ m, avec une surface BET < 50 m²/g, de préférence comprise entre 1 et 10m²/g, caractérisé en ce qu'on chauffe séparément de la vapeur d'eau et du tétrachlorure de silicium gazeux à une température de 300 à 400°C, on mélange les deux composants à une température comprise entre 300 et 400°C en proportion molaire de 2 : 1 à 8 : 1 = H₂O : SiCl₄, on fait passer le mélange gazeux dans un tube de préréaction étroit chauffé à une température de 600 à 1200°C, puis dans un autre tube de réaction chauffé entre 600 et 1000°C, de préférence 700 à 800°C, avec un temps de séjour > 5 sec, de préférence supérieur à 9 sec et avec une dépression d'au moins 100 mm de colonne d'eau (981 Pa), et on sépare le produit de réaction des gaz de la réaction.

3. Utilisation de silice hydrophile sphérique selon la revendication 1 comme charge de résines pour électronic packages.

4. Utilisation de silice hydrophile sphérique selon la revendication 1 comme agent antiblocage dans les films de matières plastiques.
